# EUROPEAN PATENT SPECIFICATION

(11) **EP 3 402 254 B1**
(45) Date of publication and mention of the grant of the patent: **23.09.2020**
(21) Application number: 17170232.7
(22) Date of filing: 09.05.2017
(51) Int. Cl.: H04W 48/18, H04W 8/20

(54) **ACTIVE MOBILE NETWORK SEARCH**
AKTIVE MOBILE NETZWERK SUCHE
RECHERCHE EN RESEAU MOBILE ACTIVE

(43) Date of publication of application: 14.11.2018
(73) Proprietor: Vodafone GmbH, 40549 Düsseldorf (DE)
(72) Inventor: Lu, Yang, 40489 Düsseldorf (DE); Wild, Peter, 47807 Krefeld (DE)
(74) Representative: Weisbrodt, Bernd

(56) References cited:
- EP-A1- 1 872 611
- US-A1- 2007 254 646
- US-A1- 2010 075 665
- US-A1- 2012 243 436
- US-A1- 2012 309 391
- US-A1- 2014 342 732
- US-A1- 2016 277 917

## Description

The present invention relates to a method for an active mobile network search by a mobile station in a telecommunications network with the mobile station being in a roaming situation in a Visited Public Land Mobile Network (VPLMN).

The invention further relates to a mobile station for an active mobile network search in a telecommunications with the mobile station being in a roaming situation in a Visited Public Land Mobile Network (VPLMN).

When a mobile station (also referred to as mobile terminal or user equipment) of a customer is in a roaming scenario outside its Home Public Land Mobile Network (HPLMN), the mobile station shall periodically attempt to obtain service on its HPLMN, on one of its Equivalent HPLMNs (EHPLMNs) or on a higher priority PLMN/access technology according to 3GPP Technical Specification (TS) 22.011. For this purpose, a value of a timer, which defines the search interval for another network, may be stored in the SIM of the mobile station. The interpretation of the stored value depends on the radio capabilities supported by the mobile station. The value for the timer can vary between 6 minutes and 8 hours, wherein a default value of 60 minutes is used if no value for the timer is stored in the SIM of the mobile station.

This leads to the situation that the mobile network search according to the state of the art is supervised by a timer which is stored in or on the SIM of the mobile station that is rather passive when the mobile station is roaming. In the best case, a search for mobile networks is conducted every 6 minutes, which leads to the drawback that the mobile station may be still attached to a mobile network with a low priority even if a higher prioritized mobile network is available.

Furthermore the method according to the state of the art does not consider what kind of radio access technology (RAT) is preferred by the mobile station. This leads to the further disadvantage that an higher prioritized RAT for example providing 4G access technology may be chosen, even if the mobile station would only need access to a 2G RAT, for example to save battery life of the mobile station.

WO 2004/040931 A2 discloses methods and an apparatus for selecting a cellular network to provide one or more communication services for a mobile communication device. For that matter, a scanning operation is performed by the mobile device to identify a plurality of cellular networks that support a voice communication service in a geographic coverage area. The mobile device then identifies which of the cellular networks makes a data communication service available to it. The mobile device assigns priority to or selects a cellular network that makes the data communication service available over a network that fails to make the data communication service available, and may register with that network.

WO 2005/048626 A1 discloses network selection methods and an apparatus with home network prioritization after network signal recovery and/or power-on. Thereby a mobile station selects and operates with a non-home communication network and may experience an out-of-coverage condition or a power down condition but subsequently regains signal coverage or is powered back on. In response, the mobile station scans to identify a plurality of communication networks in its coverage area. If a home network is identified as being available, the mobile station selects and operates with the home network.

EP 1 681 804 B1 discloses a scheme for providing regulatory compliance in performing network selection in a foreign country for communication networks. This is accomplished by a wireless user equipment device that is operable to discover an equivalent home network in a foreign country. Upon receiving a network identity code from a network node, a determination is made if the network identified by the network identity code is an equivalent home network with respect to a subscriber identity associated with the user equipment device. If so, network scanning is performed by the user equipment device in accordance with scanning procedures specified for a home country associated with the subscriber identity, provided that the geographic code portion of the network country code identifies a geographic area in the home country of the subscriber identity.

US 2012/0243436 A1 relates to network selection techniques for use in a mobile device which is configured for voice and packet data communications are described. The mobile device performs a scanning operation to identify one or more communication networks, and consults a network selection list for selecting, in accordance with assigned priorities of the list, one of the identified networks. The mobile device also determines whether a packet data service interconnection to a home network via the selected network is available. If the interconnection to the home network via the selected network is determined to be available, then the mobile device operates with voice and packet data services in the selected network. Otherwise, if the interconnection to the home network via the selected network is determined to be unavailable, then the mobile device repeats the acts of consulting and determining for the next identified network in the list.

US 2012/0309391 A1 discloses methods and an apparatus enabling dynamic and adaptive network selection. In one embodiment of the invention, a device quickly identifies the a subset of networks providing service to a particular location without obtaining and/or prioritizing a full list of all available networks. A "highest" priority network is selected for registration. For example, a mobile device that cannot locate its home (or last registered) network (e.g., Public Land Mobile Network (PLMN)), searches for any available network. The mobile device can identify its current location from information broadcast by any networks (e.g., a Mobile Country Code (MCC)). Once the mobile has identified its current location, it searches for prioritized networks within its current location.

US 2016/0277917 A1 discloses a method to cause a plurality of network identifiers to be stored in a memory; assign a priority value to each of a plurality of networks in an instance in which a mobile terminal is roaming; identify available networks; and select an available network based on the priority value of stored network identifiers. The selection of the available networks may further include determining the signal strength of the available networks; and further basing the selection of an available network on the signal strength of the available networks.

US 2010/0075665 A1 discloses a method of operating a wireless communication device may include predicting an application expected to be used based on a user interaction with the wireless communications device, determining a preferred radio access technology (RAT) based on the predicted application, determining whether the wireless communications device is currently utilizing the determined preferred RAT as a current RAT, and performing one of ensuring that the wireless communications device continues to utilize the current RAT when the determined preferred RAT corresponds to the current RAT, or searching for the determined preferred RAT when the current RAT does not correspond to the determined preferred RAT and selecting the determined preferred RAT, based on the searching, when the determined preferred RAT is found.

EP 1872611 A1 discloses that the process of PLMN Selection in roaming scenarios is based on many factors, that may exemplarily be the lowest tariff, the lowest tariff for a certain set of services only, the availability of a specific service whatever the fare, the Quality of Service (QoS).

In spite of this it is an object of the present invention to avoid the drawbacks of the prior art and to provide a method for an active mobile network search for a mobile station in a telecommunications network, particularly if the mobile station is in a roaming situation in a Visited Public Land Mobile Network (VPLMN), which improves the overall customer network experience.

The object is achieved by a method for an active mobile network search by a mobile station in a telecommunications network with the mobile station being in a roaming situation in a Visited Public Land Mobile Network, VPLMN, comprising the steps of: receiving, by a virtual application server instance of the mobile station in which an application is executable, a list of PLMNs being stored on a SIM of the mobile station and/or in a non-volatile memory of the mobile station, wherein the list is based on operator's configurations, selecting, by the application, a specific PLMN from the received list of PLMNs, providing, by the application, the selected specific PLMN to the mobile station, checking, by the mobile station, whether it is already connected to the selected specific PLMN, connecting, by the mobile station, respectively its modem, to the selected specific PLMN if it is not already connected to it, and restarting, by the mobile station, the application or virtual application server instance after connecting to the selected specific PLMN, wherein selecting the specific PLMN from the received list of PLMNs is based on information known a priori, namely by considering the availability of a requested application/service, a tariff information, and a guaranteed end-to-end QoS which is provided by the network.

The application running in the virtual application server instance in the mobile station enables the mobile station to connect to higher prioritized PLMNs in a much faster way than it can be currently expected by the implementation according to the state of the art. The application continuously actively searches for mobile networks on the application layer and thus can initiate a change of the network to which the mobile station is connected. The application can advantageously furthermore consider a priori information, which is stored in the SIM, in a non-volatile memory and/or the operator's configurations. Advantageously an overall increase of speed in network change can be achieved by the inventive solution wherein the power consumption of the mobile station does just slightly increase as the application is running in a virtual application server instance on the mobile station.

In a further embodiment of the method, a list of radio access technologies (RAT) with different priorities is provided to the mobile station by the application besides the selected specific PLMN. This has the further advantage that a list of RATs, which are desired by the user of the mobile station, can be taken into account when a mobile network change shall be conducted. Due to the consideration of desired RATs, it is possible for the mobile station to connect only to a PLMN's RAT, which fulfils the requirements provided, by the user's mobile station. In case the user need a high data rate and thus only wants to connect to 4G RATs, a network change would not be accomplished if only 2G or 3G access technology is available in a higher prioritized PLMN. On the other hand, if a user only wants to connect to 2G access technology in order to decrease power consumption of the mobile station, a PLMN that does serve with a 4G RAT will not be taken into account for a network change.

In an advantageous embodiment of the method a radio access technology (RAT) is selected from the list of radio access technologies (RAT) which have been provided to the mobile station by the application and the mobile station respectively its modem initiates to change the current radio access technology (RAT) based upon the received information. By this, it is advantageously possible for the user of the mobile station to easily change the desired behaviour of the mobile station in case of a possible network change. The list of RATs from which a certain RAT is chosen by the application can be edited by the user upon given demands.

The application in the mobile station makes its decision regarding the selection of a specific PLMN based on information known a priori, in particular the availability of a requested application/service, tariff information, a guaranteed end-to-end Quality of Service (QoS) which is provided by the network. By considering these parameters advantageously, the best possible user experience can be achieved. It is also advantageously provided that a combination of multiple parameters, for example the availability of a specific service in the mobile network and a guaranteed end-to-end QoS of the mobile network, are given. Advantageously only if all of the multiple parameters are fulfilled, a change of the mobile network will be conducted.

In a further embodiment, the application or the virtual application server instance is restarted after the mobile station respectively its modem connected to the selected specific PLMN. This advantageously ensures that the whole process of searching for mobile networks will be directly continued even if a change of the mobile network has recently taken place. In doing so, it can be continuously guaranteed that the mobile station will directly connect to the best possible mobile network based on given user criteria and existent networks.

In a further embodiment it is suggested that the application or virtual application server instance is restarted after the mobile station respectively its modem initiated to change the current radio access technology (RAT) based upon the received information. This further advantageously allows that the best possible user experience can be achieved, especially since a continuous process of mobile network search is carried out.

According to a further embodiment of the inventive method, the inventive method is particularly applied when a roaming scenario is given with the mobile station being in a VPLMN and a timer whose value is stored on the SIM of the mobile station and/or a non-volatile memory of the mobile station based on the operator's configurations is running. A further embodiment suggests that the mobile station determines the roaming parameters on the basis of the radio broadcast info, preferably without the timer.

According to a further aspect of the present invention mobile station for an active mobile network search in a telecommunications network with the mobile station being in a roaming situation in a Visited Public Land Mobile Network, VPLMN, wherein the mobile station comprises a virtual application server instance in which an application is executable that is adapted to receive a list of PLMNs being stored on a SIM of the mobile station and/or in a non-volatile memory of the mobile station, wherein the list is based on operator's configurations, the application that can be executed in the virtual application server instance of the mobile station is adapted to select a specific PLMN from the received list of PLMNs, and to provide the selected specific PLMN to the mobile station, the mobile station, respectively its modem, contains means which are adapted to check whether it is already connected to the selected specific PLMN, to connect to the selected specific PLMN if not already connected to it, and to restart the application or virtual application server instance after connecting to the selected specific PLMN, wherein the application is adapted to select the specific PLMN from the received list of PLMNs based on information known a priori, namely by considering the availability of a requested application/service, a tariff information, and a guaranteed end-to-end QoS which is provided by the network.

The virtual application server instance in the mobile station, which is running an application that is adapted to receive a list of PLMNs from the SIM of the mobile station and/or a non-volatile memory of the mobile station based on the operator's configurations, enables the mobile station to actively search for mobile network. If those mobile networks represent a higher prioritized PLMN or are preferred by the user of the mobile station due to another reason, a much faster change of the mobile network can be conducted in comparison to the implementation according 3GPP TS 22.011. Since a selection of a specific PLMN from the received list of PLMNs is done via the application that runs in the virtual application server instance, further requirements given by the user of the mobile station can be taken into account. Overall, an increase of speed in network change can be achieved by the inventive solution wherein the power consumption of the mobile station does not significantly increase as the application is running in a virtual application server instance on the mobile station.

Advantageously the application that is executable in the virtual application server instance of the mobile station is adapted to provide a list of radio access technologies (RAT) with different priorities to the mobile station besides the selected specific PLMN. Thereby the list of desired RATs can be defined by the user of the mobile station in order to define which radio access technologies, for example 2G, 3G, or 4G, are preferred for operation of the mobile terminal. As the list with different RATs is evaluated by the application running in the virtual application server instance of the mobile terminal, the mobile station may connect only to a PLMN's RAT, which fulfils the requirements provided by the user respectively the user's mobile station. Thus, if a user only wants to connect to 2G access technology in order to achieve a lower power consumption of the mobile station, a PLMN that does serve with a 4G RAT will not be taken into account for a network change.

In an advantageous embodiment the mobile station comprises means to select a radio access technology (RAT) from the list of radio access technologies (RAT) which have been provided to the mobile station by the application and further comprises means to change the current radio access technology (RAT) based upon the received information. This advantageously enables the mobile station to evaluate respectively to utilize the information about desired RATs that has been previously defined by the mobile station's user and to accordingly connect to desired RATs.

The application that is executable in the virtual application server instance of the mobile station is adapted to make its decision regarding the selection of a specific PLMN based on information known a priori, in particular the availability of a requested application/service, tariff information, a guaranteed end-to-end QoS which is provided by the network. It is provided that a combination of more than one parameter that is known a priori can also be taken into account for deciding whether a different PLMN with a specific access technology shall be connected to.

Furthermore according to another preferred embodiment of the invention, the mobile station comprises means to restart the application or the virtual application server instance after a change of the current radio access technology (RAT) based upon the received information was initiated by the mobile station respectively its modem. This advantageously enables the mobile station to keep the process of searching for mobile networks running even if a change of the mobile network has recently taken place. In doing so, it can be continuously guaranteed that the mobile station will directly connect to the best possible mobile network based on given user criteria and existent networks.

The mobile station advantageously comprises means, which are adapted to detect if the mobile station is in a VPLMN and if a timer whose value is stored on the SIM of the mobile station and/or a non-volatile memory of the mobile station based on the operator's configurations is running. If those means do not detect that a timer according to 3GPP TS 22.011 is running, a roaming scenario with the mobile station being in a VPLMN is not given and thus a change of the mobile network is not required. A further embodiment suggests that the mobile station comprises means to determine the roaming parameters on the basis of the radio broadcast info, preferably without the timer.

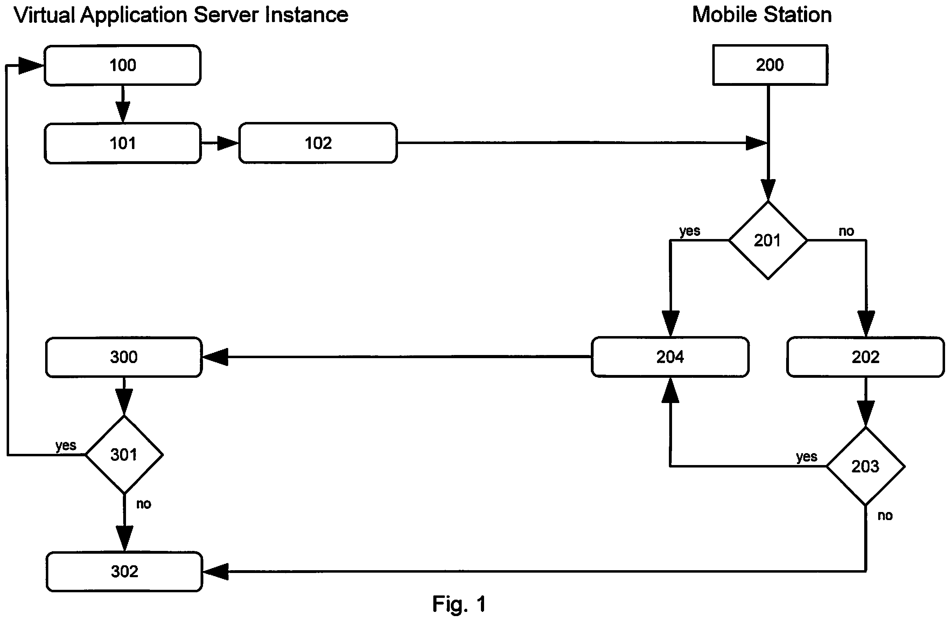

The afore-mentioned and other aspects, details and/or advantages of the present invention will be apparent from and elucidated with reference to the embodiments described hereinafter making reference to the accompanying drawings, wherein
- Fig. 1: shows a flow diagram for a mobile network search according to the present invention.

Fig. 1 shows a mobile network search according to the present invention with a mobile station being in the status of a roaming situation. The two main actors are the virtual server application instance whose activities are depicted on the left side of the figure, wherein the activities of the mobile station being the further actor are depicted on the right side of the figure. For a better understanding, it is assumed that the mobile station is currently connected to PLMN#0.

In step 100 of Fig. 1 the application according to the present invention that is adapted to receive a list of PLMNs from the SIM of the mobile station and/or a non-volatile memory of the mobile station based on the operator's configurations, is started in the virtual application server instance of the mobile station.

Subsequently in step 101, the application selects a specific PLMN, referred to as PLMN#A, based on the a priori information stored in SIM. Additionally the application provides a list of desirable RATs with different priorities, wherein for the present case the desired RAT is a 4G access technology in order to achieve a high data transfer rate.

The information about the desired PLMN#A as the selected specific PLMN and the list of RATs with different priorities and the 4G access technology being on highest prioritization is provided to the mobile station in step 102.

At this stage, the mobile station is currently in a roaming situation, see step 200, and connected to PLMN#0 as described before. The mobile station receives the information about the desired PLMN#A and the desired 4G RAT from the application of the virtual application server instance and checks in a first validation in step 201 if it is already connected to the selected specific PLMN#A provided by the application. If this is not the case, the method continues in step 202, wherein the mobile station tries to connect to the selected specific PLMN#A.

In step 203 it is afterwards determined if the mobile station was successful to connect to the selected specific PLMN#A provided by the application.

If this is the case, the process continues in step 204 and the mobile station selects the RAT, in the present scenario the desired 4G RAT, which has been provided by the application that is running in the virtual application server instance. Subsequently the mobile station respectively its modem initiates to change the current radio access technology.

Furthermore after the provided RAT has been selected by the mobile station and a change has been initiated, the application in the virtual application server instance is restarted in the selected specific PLMN#A, see step 300.

Thereupon the virtual server application instance checks in step 301 if the application could successfully be restarted in the PLMN#A to which the mobile station is now connected. If the restart of the application was successful, the method starts from the very beginning in step 100 as the application is started in the virtual application server instance, by now in the PLMN#A.

If the restart of the application was found not to be successful in step 301 or if the mobile station was found in step 203 not to be able to connect to the selected specific PLMN#A (see step 202), the process continues in step 302, where the application in the virtual application server instance is restarted in the PLMN#0 to which the mobile station was connected initially.

### List of references:

- 100: Activity: the application is started in the virtual application server instance
- 101: Activity: the application selects a specific PLMN based on the a priori information stored in SIM; optionally the application can also provide a list of desirable RATs with different priorities
- 102: Activity: the selected specific PLMN and the list of RATs with different priorities is provided to the mobile station
- 200: Status: the mobile station is in a roaming scenario
- 201: Decision: the mobile station checks if it is already connected to the selected specific PLMN provided by the application
- 202: Activity: the mobile station tries to connect to the selected specific PLMN
- 203: Decision: the mobile station checks if it was successful to connect to the selected specific PLMN provided by the application
- 204: Activity: the mobile station selects the RAT which has been provided by the application in the specific PLMN (optional step)
- 300: Activity: the application in the virtual application server instance is restarted in the selected specific PLMN
- 301: Decision: the virtual application server instance checks if the application could successfully be restarted
- 302: Activity: the application in the virtual application server instance is restarted in the PLMN to which the mobile station was connected initially

## Claims

1. Method for an active mobile network search by a mobile station in a telecommunications network with the mobile station being in a roaming situation in a Visited Public Land Mobile Network, VPLMN, comprising the steps of:
receiving (100), by a virtual application server instance of the mobile station in which an application is executable, a list of PLMNs being stored on a SIM of the mobile station and/or in a non-volatile memory of the mobile station, wherein the list is based on operator's configurations,
selecting (101), by the application, a specific PLMN from the received list of PLMNs,
providing (102), by the application, the selected specific PLMN to the mobile station,
checking (201), by the mobile station, whether it is already connected to the selected specific PLMN,
connecting (202), by the mobile station, respectively its modem, to the selected specific PLMN if it is not already connected to it, and
restarting (300), by the mobile station, the application or virtual application server instance after connecting (202) to the selected specific PLMN, wherein selecting (101) the specific PLMN from the received list of PLMNs is based on information known a priori, namely by considering the availability of a requested application/service, a tariff information, and a guaranteed end-to-end QoS which is provided by the network.

2. Method according to claim 1,
**characterized in**
providing (102), by the application, a list of radio access technologies with different priorities to the mobile station in addition to the selected specific PLMN.

3. Method according to claim 2,
**characterized in**
selecting (204), by the application being executable in the mobile station, a radio access technology from the list of radio access technologies which have been provided to the mobile station and initiating, by the mobile station respectively its modem, to change the current radio access technology based upon the selected radio access technology.

4. Method according to claims 1 to 3,
**characterized in that**
a roaming scenario (200) is given with the mobile station being in a VPLMN and a timer, defining a search interval for another network, whose value is stored on the SIM of the mobile station and/or a non-volatile memory of the mobile station based on the operator's configurations is running.

5. Method according to claims 1 to 4,
**characterized in**
selecting (101), by the application, the specific PLMN from the received list of PLMNs based on the decision if a PLMN is of a higher priority than those of the same country as the current serving PLMN which are stored in the list.

6. Mobile station for an active mobile network search in a telecommunications network with the mobile station being in a roaming situation in a Visited Public Land Mobile Network, VPLMN, wherein
the mobile station comprises a virtual application server instance in which an application is executable that is adapted to receive (100) a list of PLMNs being stored on a SIM of the mobile station and/or in a non-volatile memory of the mobile station, wherein the list is based on operator's configurations, the application that can be executed in the virtual application server instance of the mobile station is adapted
to select (101) a specific PLMN from the received list of PLMNs, and
to provide (102) the selected specific PLMN to the mobile station,
the mobile station, respectively its modem, contains means which are adapted
to check (201) whether it is already connected to the selected specific PLMN,
to connect (202) to the selected specific PLMN if not already connected to it, and
to restart (300) the application or virtual application server instance after connecting (202) to the selected specific PLMN,
wherein the application is adapted to select (101) the specific PLMN from the received list of PLMNs based on information known a priori, namely by considering the availability of a requested application/service, a tariff information, and a guaranteed end-to-end QoS which is provided by the network.

7. Mobile station according to claim 6,
**characterized in that**
the application that is executable in the virtual application server instance of the mobile station is adapted to provide (102) a list of radio access technologies with different priorities to the mobile station in addition to the selected specific PLMN.

8. Mobile station according to claim 7,
**characterized in that**
the mobile station comprises means to select (204), by the application being executable in the mobile station, a radio access technology from the list of radio access technologies which have been provided to the mobile station and further comprises means to change the current radio access technology based upon the selected radio access technology.

9. Mobile station according to claims 6 to 8,
**characterized in that**
the mobile station comprises means which are adapted to detect if the mobile station is in a VPLMN and if a timer, defining a search interval for another network, whose value is stored on the SIM of the mobile station and/or a non-volatile memory of the mobile station based on the operator's configurations is running.

## Patentansprüche

1. Verfahren zur aktiven Suche nach einem Mobilfunknetz durch eine mobile Station in einem Telekommunikationsnetz, wobei sich die mobile Station in einer Roamingsituation in einem Visited Public Land Mobile Network, VPLMN, befindet, umfassend die Schritte:
Empfangen (100), durch eine virtuelle Anwendungsserver-Instanz der mobilen Station, in welcher eine Anwendung ausführbar ist, einer Liste von auf einer SIM der mobilen Station und/oder in einem nichtflüchtigen Speicher der mobilen Station gespeicherten PLMNs, wobei die Liste auf Konfigurationen eines Netzbetreibers basiert,
Auswählen (101) eines spezifischen PLMN von der empfangenen Liste der PLMNs durch die Anwendung,
Bereitstellen (102) des ausgewählten spezifischen PLMN an die mobile Station durch die Anwendung,
Überprüfen (201), durch die mobile Station, ob diese bereits mit dem ausgewählten spezifischen PLMN verbunden ist,
Verbinden (202), durch die mobile Station beziehungsweise deren Modem, mit dem ausgewählten spezifischen PLMN, falls diese nicht bereits mit ihm verbunden ist, und
Neustarten (300), durch die mobile Station, der Anwendung oder der virtuellen Anwendungsserver-Instanz nach dem Verbinden (202) mit dem ausgewählten spezifischen PLMN,
wobei das Auswählen (101) des spezifischen PLMN aus der empfangenen Liste von PLMNs auf im Voraus bekannten Informationen basiert, nämlich unter Berücksichtigung der Verfügbarkeit einer angefragten Anwendung/eines angefragten Dienstes, einer Tarifinformation und einer vom Netz bereitgestellten garantierten Ende-zu-Ende-Servicequalität.

2. Verfahren nach Anspruch 1,
**gekennzeichnet durch**
Bereitstellen (102), durch die Anwendung, einer Liste von Funkzugangstechnologien mit unterschiedlichen Prioritäten an die mobile Station zusätzlich zu dem ausgewählten spezifischen PLMN.

3. Verfahren nach Anspruch 2,
**gekennzeichnet durch**
Auswählen (204), durch die in der mobilen Station ausführbare Anwendung, einer Funkzugangstechnologie aus der Liste von Funkzugangstechnologien, die der mobilen Station bereitgestellt wurden, und Initiieren, durch die mobile Station beziehungsweise ihr Modem, eines Wechsels der aktuellen Funkzugangstechnologie auf der Basis der ausgewählten Funkzugangstechnologie.

4. Verfahren nach einem der Ansprüche 1 bis 3,
**dadurch gekennzeichnet, dass**
ein Roaming-Szenario (200) gegeben ist, in dem die mobile Station sich in einem VPLMN befindet, und in dem ein Zeitgeber läuft, der ein Suchintervall für ein weiteres Netz definiert, dessen Wert auf der SIM der mobilen Station und/oder in einem nichtflüchtigen Speicher der mobilen Station gespeichert ist, auf Basis der Konfigurationen des Netzbetreibers.

5. Verfahren nach einem der Ansprüche 1 bis 4,
**gekennzeichnet durch**
Auswählen (101), durch die Anwendung des spezifischen PLMN aus der empfangenen Liste von PLMNs auf der Basis der Entscheidung, ob ein PLMN eine höhere Priorität aufweist als diejenigen desselben Landes wie das aktuelle dienende PLMN, die in der Liste gespeichert sind.

6. Mobile Station zur aktiven Suche nach einem Mobilfunknetz in einem Telekommunikationsnetz, wobei sich die mobile Station in einer Roamingsituation in einem Visited Public Land Mobile Network, VPLMN, befindet, wobei
die mobile Station eine virtuelle Anwendungsserver-Instanz aufweist, in welcher eine Anwendung ausführbar ist, die dazu eingerichtet ist, eine Liste von auf einer SIM der mobilen Station und/oder in einem nichtflüchtigen Speicher der mobilen Station gespeicherten PLMNs zu empfangen (100), wobei die Liste auf den Konfigurationen eines Netzbetreibers basiert,
wobei die Anwendung, die in der virtuellen Anwendungsserver-Instanz der mobilen Station ausgeführt werden kann, dazu eingerichtet ist,
ein spezifisches PLMN aus der empfangenen Liste von PLMNs auszuwählen (101), und
das ausgewählte spezifische PLMN der mobilen Station bereitzustellen (102),
wobei die mobile Station beziehungsweise ihr Modem Mittel aufweist, die dazu eingerichtet sind,
zu überprüfen (201), ob sie bereits mit dem ausgewählten spezifischen PLMN verbunden ist,
sie mit dem ausgewählten spezifischen PLMN zu verbinden (202), falls sie nicht bereits mit ihm verbunden ist, und
die Anwendung oder die virtuelle Anwendungsserver-Instanz nach dem Verbinden (202) mit dem ausgewählten spezifischen PLMN neu zu starten (300),
wobei die Anwendung dazu eingerichtet ist, das spezifische PLMN aus der empfangenen Liste von PLMNs auf Basis von im Voraus bekannten Informationen auszuwählen (101), nämlich unter Berücksichtigung der Verfügbarkeit einer angefragten Anwendung/eines angefragten Dienstes, einer Tarifinformation und einer vom Netz bereitgestellten garantierten Ende-zu Ende-Servicequalität.

7. Mobile Station nach Anspruch 6,
**dadurch gekennzeichnet, dass**
die Anwendung, die in der virtuellen Anwendungsserver-Instanz der mobilen Station ausführbar ist, dazu eingerichtet ist, eine Liste von Funkzugangstechnologien mit unterschiedlichen Prioritäten an die mobile Station bereitzustellen (102), zusätzlich zu dem ausgewählten spezifischen PLMN.

8. Mobile Station nach Anspruch 7,
**dadurch gekennzeichnet, dass**
die mobile Station Mittel aufweist, um durch die in der mobilen Station ausführbare Anwendung eine Funkzugangstechnologie aus der Liste von Funkzugangstechnologien auszuwählen (204), die der mobilen Station bereitgestellt wurden, und wobei die mobile Station ferner Mittel aufweist, um die aktuelle Funkzugangstechnologie auf der Basis der ausgewählten Funkzugangstechnologie zu wechseln.

9. Mobile Station nach einem der Ansprüche 6 bis 8,
**dadurch gekennzeichnet, dass**
die mobile Station Mittel aufweist, die dazu eingerichtet sind zu erkennen, ob die mobile Station sich in einem VPLMN befindet, und ob ein Zeitgeber läuft, der ein Suchintervall für ein weiteres Netz definiert, dessen Wert auf der SIM der mobilen Station und/oder in einem nicht flüchtigen Speicher der mobilen Station gespeichert ist, auf der Basis der Konfigurationen des Netzbetreibers.

## Revendications

1. Procédé de recherche d'un réseau mobile actif par une station mobile dans un réseau de télécommunication, dans lequel la station mobile se trouve dans une situation d'itinérance dans un réseau public terrestre de téléphone mobile visité, VPLMN, comprenant les étapes de:
recevoir (100), par une instance de serveur d'application virtuelle de la station mobile, dans laquelle une application peut être exécutée, une liste de PLMNs stockés sur une carte SIM de la station mobile et/ou dans une mémoire non-volatile de la station mobile, dans lequel la liste est basée sur des configurations d'un opérateur,
sélectionner (101), par l'application, un PLMN spécifique de la liste de PLMNs reçue,
fournir (102), par l'application, le PLMN spécifique sélectionné à la station mobile,
vérifier (201), par la station mobile, si elle est déjà reliée au PLMN spécifique sélectionné,
établir une liaison (202), par la station mobile, ou son modem, au PLMN spécifique sélectionné, si la station mobile n'est pas encore reliée au PLMN spécifique sélectionné, et
redémarrer (300), par la station mobile, l'application ou l'instance de serveur d'application virtuelle après l'établissement de la liaison (202) au PLMN spécifique sélectionné,
dans lequel la sélection (101) du PLMN spécifique de la liste de PLMNs reçue est basée sur des informations connues a priori, à savoir en tenant compte de la disponibilité d'une application demandée/d'un service demandé, d'une information tarifaire, et d'une qualité de service de bout-en-bout garantie, qui est fournie par le réseau.

2. Procédé selon la revendication 1,
**caractérisé par**
la fourniture (102), par l'application, d'une liste de technologies d'accès radio avec des priorités différentes à la station mobile en plus du PLMN spécifique sélectionné.

3. Procédé selon la revendication 2,
**caractérisé par**
la sélection (204), par l'application, qui peut être exécutée dans la station mobile, d'une technologie d'accès radio de la liste de technologies d'accès radio, qui a été fournie à la station mobile, et l'initiation, par la station mobile ou son modem, du changement de la technologie d'accès radio actuelle sur la base de la technologie d'accès radio sélectionnée.

4. Procédé selon les revendications 1 à 3,
**caractérisé en ce que**
un scénario d'itinérance (200) est donné, où la station mobile se trouve dans un VPLMN et où un minuteur, qui définit un intervalle de recherche d'un autre réseau, dont la valeur est stockée sur la SIM de la station mobile et/ou dans une mémoire non-volatile de la station mobile sur la base des configurations d'un opérateur, est en marche.

5. Procédé selon les revendications 1 à 4,
**caractérisé par**
la sélection (101) du PLMN spécifique par l'application dans la liste de PLMNs reçue sur la base de la décision, si un PLMN a une priorité plus élevée que ceux du même pays comme le PLMN actuellement en fonction, lesquels sont stockés dans la liste.

6. Station mobile pour la recherche d'un réseau mobile actif dans un réseau de télécommunication, dans lequel la station mobile se trouve dans une situation d'itinérance dans un réseau public terrestre de téléphone mobile visité, VPLMN, dans lequel
la station mobile comprend une instance de serveur d'application virtuelle, dans laquelle une application peut être exécutée, qui est adaptée à recevoir (100) une liste de PLMNs stockés sur une carte SIM de la station mobile et/ou dans une mémoire non-volatile de la station mobile, dans lequel la liste est basée sur des configurations d'un opérateur, l'application, qui peut être exécutée dans l'instance de serveur d'application virtuelle de la station mobile étant adaptée à
sélectionner (101) un PLMN spécifique de la liste de PLMNs reçue, et
fournir (102) le PLMN spécifique sélectionné à la station mobile,
la station mobile ou son modem comprend des moyens, qui sont adaptés à vérifier (201) si la station mobile est déjà reliée au PLMN spécifique sélectionné,
établir une liaison (202) au PLMN spécifique sélectionné, si la station mobile n'est pas encore reliée au PLMN spécifique sélectionné, et redémarrer (300) l'application ou l'instance de serveur d'application virtuelle après l'établissement de la liaison (202) au PLMN spécifique sélectionné,
dans lequel l'application est adaptée à sélectionner (101) le PLMN spécifique de la liste de PLMNs reçue est basée sur des informations connues a priori, à savoir en tenant compte de la disponibilité d'une application demandée/d'un service demandé, d'une information tarifaire, et d'une qualité de service de bout-en-bout garantie, qui est fournie par le réseau.

7. Station mobile selon la revendication 6,
**caractérisée en ce que**
l'application, qui peut être exécutée dans l'instance de serveur d'application virtuelle de la station mobile est adaptée à fournir (102) une liste de technologies d'accès radio avec des priorités différentes à la station mobile en plus du PLMN spécifique sélectionné.

8. Station mobile selon la revendication 7,
**caractérisée en ce que**
la station mobile comprend des moyens destinés à sélectionner (204), par l'application, qui peut être exécutée dans la station mobile, une technologie d'accès radio de la liste de technologies d'accès radio, qui a été fournie à la station mobile, et la station mobile comprend en outre des moyens destinés à changer la technologie d'accès radio actuelle sur la base de la technologie d'accès radio sélectionnée.

9. Station mobile selon les revendications 6 à 8,
**caractérisée en ce que**
la station mobile comprend des moyens, qui sont adaptés de détecter si la station mobile se trouve dans un VPLMN et si un minuteur, qui définit un intervalle de recherche d'un autre réseau, dont la valeur est stockée sur la SIM de la station mobile et/ou dans une mémoire non-volatile de la station mobile sur la base des configurations d'un opérateur, est en marche.
